(19) Europäisches Patentamt
European Patent Office
Office européen des brevets

(11) **EP 1 732 399 B1**

(12) **EUROPEAN PATENT SPECIFICATION**

(45) Date of publication and mention
of the grant of the patent:
**12.01.2011 Bulletin 2011/02**

(51) Int Cl.:
**A23L 1/056** (2006.01)

(21) Application number: **05725795.8**

(22) Date of filing: **17.03.2005**

(86) International application number:
**PCT/US2005/008855**

(87) International publication number:
**WO 2005/089416 (29.09.2005 Gazette 2005/39)**

(54) **LYSOZYME-CHITOSAN FILMS**

LYSOZYM-CHITOSAN-FILME

FILMS EN LYSOZYME-CHITOSANE

(84) Designated Contracting States:
**AT BE BG CH CY CZ DE DK EE ES FI FR GB GR HU IE IS IT LI LT LU MC NL PL PT RO SE SI SK TR**

(30) Priority: **18.03.2004 US 554623 P**

(43) Date of publication of application:
**20.12.2006 Bulletin 2006/51**

(73) Proprietor: **The State of Oregon acting by and through the
State Board of Higher Education on behalf of
Oregon State University
Corvallis, OR 97331-2140 (US)**

(72) Inventors:
• **ZHAO, Yanyun**
  **Corvallis, OR 97330 (US)**
• **PARK, Su-il**
  **Corvallis, OR 97333 (US)**
• **DAESCHEL, Mark, A.**
  **Philomath, OR 97370-9538 (US)**

(74) Representative: **Taylor, Kate Laura et al
Harrison Goddard Foote
106 Micklegate
York,
YO1 6JX (GB)**

(56) References cited:
JP-A- 8 089 224    JP-A- 10 015 042
JP-A- 11 032 742    US-A- 4 946 870
US-A- 5 744 166    US-A1- 2004 137 041
US-B1- 6 451 365    US-B1- 6 586 029

• CHEN M-C YEH GENE H-C CHIANG B-H:
"Antimicrobial and physicochemical properties
of methylcellulose and chitosan films containing
a preservative" JOURNAL OF FOOD
PROCESSING AND PRESERVATION,
TRUMBULL, CT, US, vol. 20, 1 January 1996
(1996-01-01), pages 379-390, XP002954689

**Description**

**FIELD**

Disclosed herein are antimicrobial films that are particularly useful for protecting food articles.

**BACKGROUND**

In solid or semi-solid food articles, microbial growth occurs primarily on the surface. Heat treatment and chemical preservatives have been the most widely used methods for maintaining microbiological safety and food quality. Antimicrobial enhanced packaging films have great potential for insuring microbiological safety of food surfaces through controlled release of antimicrobial substances from a carrier film structure to the food surface. In addition, consumer concerns with synthetic chemical food preservatives have resulted in increasing interest in alternative, more "consumer-friendly" edible protective films.

Lysozyme is a well studied lytic enzyme found in many natural systems. It is a small and stable enzyme with a well-studied dimensional structure and sequence. The use of lysozyme in food preservation has potential because of its stability over a wide range of pH and temperature conditions. However, its limited antimicrobial efficacy against Gramnegative bacteria has restricted its application in the food industry. Chitosan is a known film-forming biopolymer that also exhibits antimicrobial activity.

US 6 451 365 discloses an antibacterial composition comprising: (a) a first component including at least one gram positive bacteristatic or bactericidal compound selected from the group consisting of lantibiotics, pediocin, and lacticin class bacteriocins, and lytic enzymes; and (b) a second component including at least one compound selected from the group consisting of hops acids and hops acid derivatives.

JP 08 089 224 discloses a preservative comprising a steroid saponin extracted from Yucca with a specific antimicrobial substance.

JP 11 032 742 discloses an aqueous solution of chitosan comprising at least one kind of anionic non-ionic surfactant.

JP10 015 042 discloses a composite consisting essentially of the water soluble salt of calcium and chitosan.

Chen et al, Journal of Food Processing and Preservation 20 (1996) 379-390 discloses an antimicrobial film comprising methylcellulose mixed with chitosan and sodium benzoate or potassium sorbate.

A need continues to exist for films with enhanced antimicrobial activity without significantly diminished mechanical properties.

**SUMMARY**

One aspect of the disclosure herein contemplates a composite film comprising lysozyme incorporated within a chitosan polymer matrix. In another aspect, there is disclosed a film that includes chitosan, and about 10 to about 200 weight percent lysozyme, based on the weight of chitosan.

Also disclosed is a method for making a film that includes dissolving or dispersing chitosan and lysozyme in an aqueous medium resulting in a film-forming solution or dispersion; applying the film-forming solution or dispersion to a substrate surface; and converting the film-forming solution or dispersion into a film.

In a particularly useful application, the film is an antimicrobial protectant for a food article.

**BRIEF DESCRIPTION OF THE DRAWINGS**

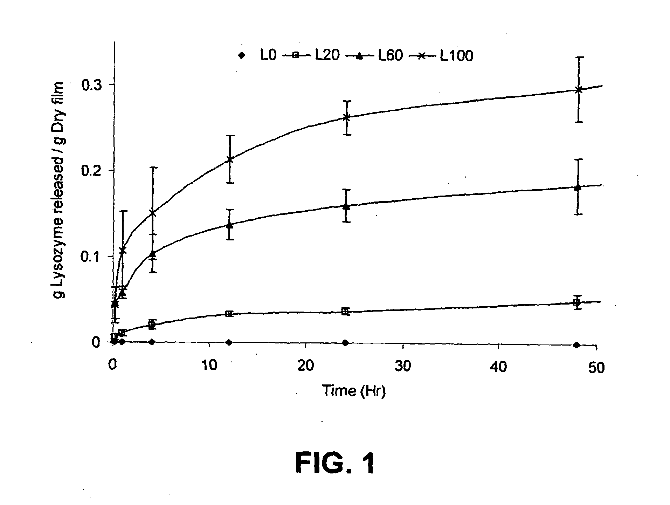

FIG. 1 is a graph depicting the release pattern of lysozyme from a lysozyme-chitosan composite film matrix to a 0.15 M phosphate buffer as a function of time. N=6; L0 = 0% lysozyme (w/w chitosan); L20 = 20% lysozyme (w/w chitosan); L60 = 60% lysozyme (w/w chitosan); L100 = 100% lysozyme (w/w chitosan). The film thickness was 72.6 $\pm$ 8.2 $\mu$m.

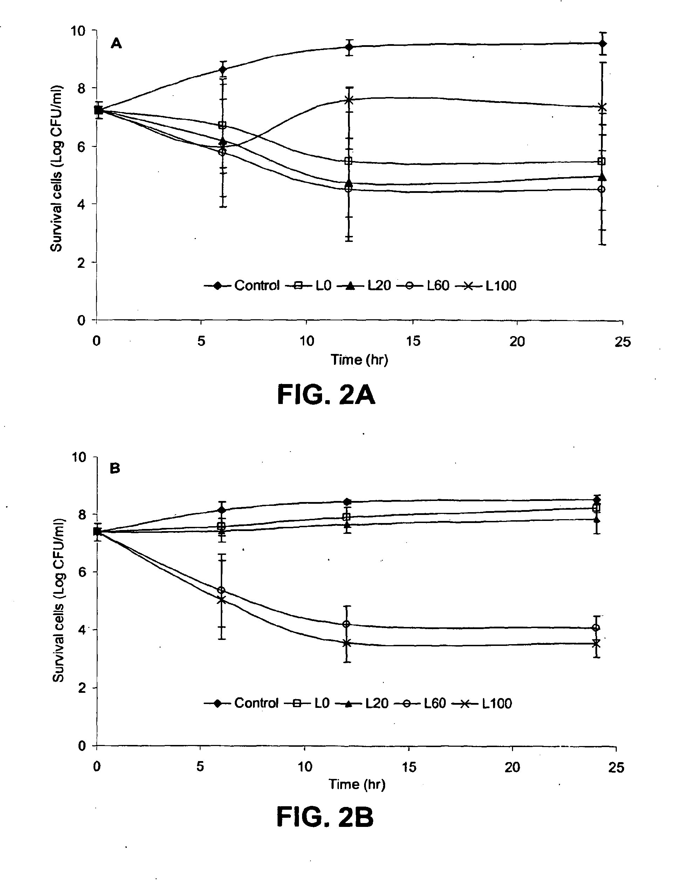

FIGS. 2A and 2B are graphs depicting the effects of lysozyme-chitosan composite films against *E. coli* in BHI broth (2A) and *S. faecalis* in MRS broth (2B). N=6; control = no film; L0 = 0% lysozyme (w/w chitosan); L20 = 20% lysozyme (w/w chitosan); L60 = 60% lysozyme (w/w chitosan); L100 = 100% lysozyme (w/w chitosan):

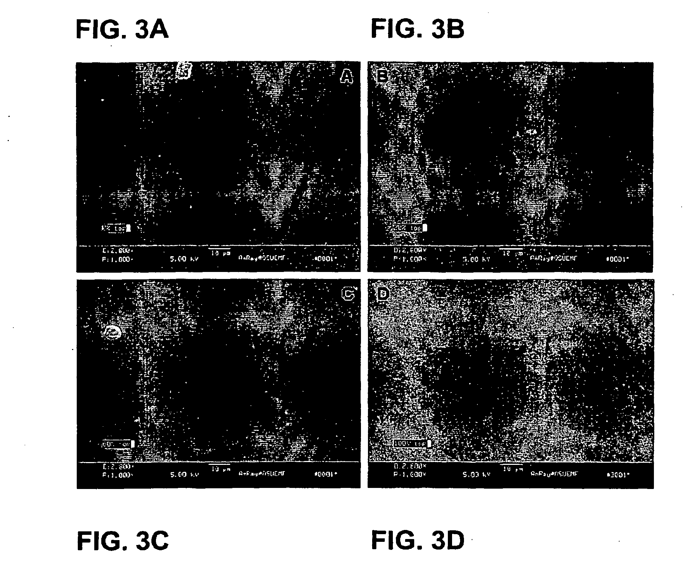

FIGS. 3A - 3D are scanning electron micrographs of the surface of lysozyme-chitosan composite films viewed at a magnification of 1,000X; L0 (3A), L20 (3B), L60 (3C), L100 (3D). L0 = 0% lysozyme (w/w chitosan); L20 = 20% lysozyme (w/w chitosan); L60 = 60% lysozyme (w/w chitosan); L100 = 100% lysozyme (w/w chitosan).

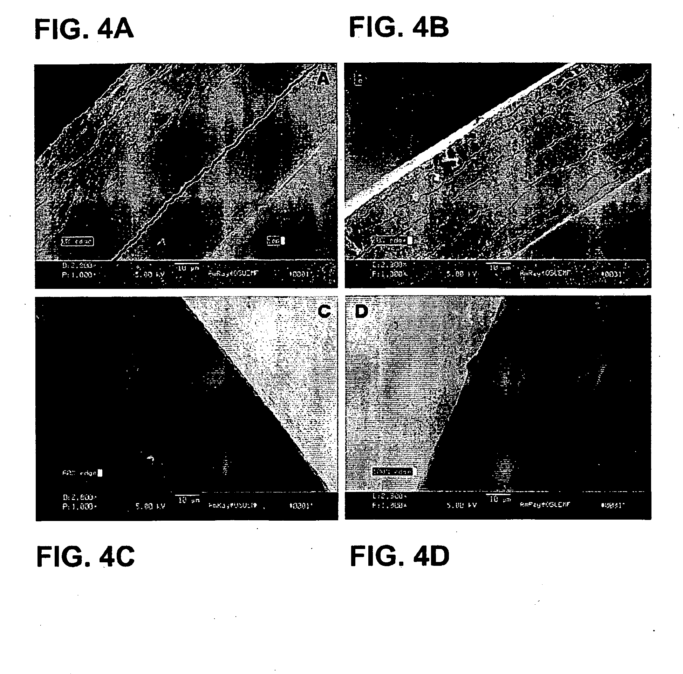

FIGS. 4A - 4D are scanning electron micrographs of the cross-sections of lysozyme-chitosan composite films viewed at a magnification of 1,000X; L0 (4A), L20 (4B), L60 (4C), L100 (4D). L0 = 0% lysozyme (w/w chitosan); L20 = 20% lysozyme (w/w chitosan); L60 = 60% lysozyme (w/w chitosan); L100 = 100% lysozyme (w/w chitosan).

## DETAILED DESCRIPTION

For ease of understanding, the following terms used herein are described below in more detail:

"Ambient room conditions" means a room temperature of about 10°C to about 40°C, typically about 20°C to about 25°C, a pressure of approximately 1 atmosphere, and an atmosphere that contains a certain amount of moisture.

An "analog" is a molecule that differs in chemical structure from a parent compound, for example a homolog (differing by an increment in the chemical structure, such as a difference in the length of an alkyl chain), a molecular fragment, a structure that differs by one or more functional groups, or a change in ionization.

An "antimicrobial effective amount" is an amount of an antimicrobial component or mixture of components that is sufficient to inhibit the growth of at least one microbe in a sample to a statistically significant degree, preferably by at least about 25%, more preferably by at least about 50%, and most preferably completely inhibiting growth of the microbe, compared to a control sample lacking the antimicrobial component.

"Chitosan" (also referred to as poly-(1→4)-β-D-glucosamine) is inclusive of deacetylated chitin (chitin is also referred to as β-(1-4)-poly-N-acetyl-D-glucosamine) and salts thereof as described in more detail below. The shells of shellfish and crustaceans are a common source of chitin from which chitosan is derived.

"Film" is inclusive of coatings, and the film may be discontinuous or substantially continuous over the surface of the food article to which it is applied or on which it is formed. For example, "film" is inclusive of both a stand alone film that may be wrapped onto a food article, and a coating that is formed on the food article via spraying, dipping, dripping or similar technique.

"Inhibiting" means that the films disclosed herein will slow or stop the growth or proliferation of certain microbes for a certain period of time.

"Lysozyme" denotes a family of enzymes that catalyze the hydrolysis of certain mucopolysaccharides of bacterial cell walls, specifically the β (1-4) glycosidic linkages between N-acetylmuramic acid and N-acetylglucosamine, and cause bacterial lysis. Lysozymes that can be used herein include naturally-occurring lysozymes, synthetic lysozymes, and recombinant lysozymes as described below in more detail.

"Microbe" or "microbial" will be used to refer to microscopic organisms or matter, including fungal and bacterial organisms, capable of infecting humans or animals and/or causing food spoilage or other undesirable food degradation or alteration. The term "anti-microbial" will thus be used herein to refer to a material or agent that kills or otherwise inhibits the growth of fungal and/or bacterial organisms.

The above term descriptions are provided solely to aid the reader, and should not be construed to have a scope less than that understood by a person of ordinary skill in the art or as limiting the scope of the appended claims.

The singular terms "a," "an," and "the" include plural referents unless context clearly indicates otherwise. Similarly, the word "or" is intended to include "and" unless the context clearly indicates otherwise. The word "comprises" indicates "includes." Unless otherwise indicated, description of components in chemical nomenclature refers to the components at the time of addition to any combination specified in the description, but does not necessarily preclude chemical interactions among the components of a mixture once mixed.

The films disclosed herein include at least one chitosan and at least one lysozyme, both of which are abundantly available renewable materials. It has been found that a chitosan-based film matrix can effectively carry a high concentration of lysozyme resulting in lysozyme-chitosan composite films. Lysozyme can be released from the polymeric chitosan film matrix in a controlled manner and retains its lytic activity against bacterial cell wall substrates. For example, the antimicrobial component lysozyme (and chitosan in certain instances) can be released from the film and migrate into food article structure. Such composite films have enhanced, synergistic antimicrobial activity against both Gram-positive and Gram-negative bacteria in contrast to chitosan alone or lysozyme alone, without diminishing moisture barrier characteristics of the films. In certain examples of the film, all the components are edible for safe human or animal consumption, and are available from renewable sources. In addition, the film is biodegradable.

The lysozyme is substantially homogeneously distributed throughout the polymeric network formed by the chitosan molecules. The lysozyme may exist in the form of micro-particles distributed within the chitosan network wherein the lysozyme molecules are hydrogen bonded and/or van der Waals interacting with the chitosan molecules.

Chitosan is an abundant, renewable, and non-toxic polymer that is biocompatible with many other substances. Any form or grade (e.g. food or medical) of chitosan may be employed to make the film. For instance, the viscosity average molecular weight of the chitosan may range from about 20 to about 2,000 kDa, and the degree of deacetylation may range from about 70 to about 90%. According to one illustrative method for producing the film, the chitosan ingredient (or mixtures of different chitosans) is initially dissolved in an aqueous acid solution resulting in the formation of a chitosan salt. Examples of the resulting chitosan salt that is present in the film include chitosan acetate, chitosan sorbate, chitosan propionate, chitosan lactate, chitosan glutamate, chitosan benzoate, chitosan citrate, chitosan maleate, chitosan glycolate, chitosan acrylate, chitosan succinate, chitosan oxalate, chitosan ascorbate, chitosan tartarate, and mixtures thereof. The amount of chitosan in the film may vary depending upon the desired film properties. For example, the film may contain about 25 to about 90, more particularly about 35 to about 65, weight percent chitosan, based on the total solid weight of the film.

Lysozymes are natural antimicrobial polypeptides that occur in diverse organisms including viruses, birds, mammals, and plants. In humans, lysozymes are found in spleen, lung, kidney, white blood cells, plasma, saliva, milk, tears, and cartilage. Thus, lysozyme can be isolated from milk, tear fluid, saliva and nasal mucus of humans. It is found in the milk and the colostrum of cows. It has also been possible to isolate the lysozyme from cauliflower juice. However, the most important source which allows lysozyme to be extracted on an industrial scale is chicken albumen. Lysozyme is also known as muramidase or N-acetylmuramyl hydrolase. The human form can also be produced recombinantly. In the films disclosed herein, effective amounts of lysozyme may vary depending on the source of the lysozyme. Some are more potent than others, with chicken lysozyme being less active than human lysozyme. The antimicrobial effective amount of lysozyme in the film may also vary depending upon the desired film properties. In particular, the minimum amount of lysozyme should be sufficient to provide antimicrobial activity. The maximum amount of lysozyme should not be so great as to significantly degrade the film's mechanical or water vapor permeability properties. For example, the lysozyme may be present in the film in an amount of about 10 to about 200 weight percent, more particularly about 10 to about 100 weight percent, and most particularly about 30 to about 90 weight percent, by weight of chitosan. In other words, the film may include an amount of lysozyme up to twice the amount of chitosan. If the amount of lysozyme exceeds 200 percent by weight of the chitosan, the film may become very brittle and mechanically weak.

An optional ingredient of the film is at least one plasticizer, which may or may not be a renewable material. The plasticizer can reduce film brittleness, and increase film flexibility and impact resistance. Illustrative plasticizers include glycerol, sorbitol, propylene glycol, ethylene glycol, diethylene glycol, triethylene glycol, polyethylene glycol (e.g., PEG 300 and PEG 400), dibutyl tartrate, propanediol, butanediol, acetylated monoglyceride, and mixtures thereof. The amount of plasticizer in the film may vary depending upon the desired film properties. In particular, the amount of plasticizer should be increased with increasing lysozyme concentration due to the weak film-forming nature of lysozyme. For example, the film may contain about 1 to about 50, more particularly about 20 to about 30, weight percent plasticizer by weight of the chitosan.

Another optional ingredient of the film is at least one crosslinking agent, which may or may not be a renewable material. The crosslinking agent can improve the water vapor barrier property of the film, and decrease the water solubility of the film. Illustrative crosslinking agents include glutaraldehyde, formaldehyde, glyoxal, dialdehyde starch, substances that contain multivalent ions (e.g., calcium and magnesium cations) and mixtures thereof. The amount of crosslinking agent in the film may vary depending upon the desired film properties. For example, the film may contain about 1 to about 20, more particularly about 5 to about 10, weight percent crosslinking agent, based on the weight of chitosan.

Further optional ingredients include antioxidants, other antimicrobial agents, flavor/color agents, hydrophobic agents, nutraceuticals, and similar additives. To improve water barrier properties, hydrophobic additives, such as fatty acids (i.e. oleic acid, lauric acid, myristic acid, palmitic acid and stearic acid), acetylated glycerides, waxes (i.e. carnauba wax, bee wax, and paraffin wax), and oils (i.e., mineral oil and vegetable oil) may be incorporated into the film composition in concentration ranges of about 20 to about 100% by weight of chitosan. Nutraceuticals, such as minerals and vitamins may be incorporated into the film matrix to enhance the nutritional values of wrapped or coated products. For example, calcium, zinc and vitamin E may be incorporated to enhance the health benefit of wrapped or coated products (see Park, S.-I. and Zhao, Y. 2004. Incorporation of High Concentration of Mineral or Vitamin into Chitosan-Based Films. Journal of Agricultural and Food Chemistry. 2004, vol. 52, pp. 1933-1939).

The film may be made by any film forming technique including casting (i.e., stand alone film formation), dipping, spraying, brushing, falling-film, and similar methods. According to one variant, all the ingredients of the film are mixed together in a liquid mixture (i.e., the film-forming mixture) that is then formed into the film. For instance, the liquid mixture may be substantially uniformly distributed over a substrate surface and subsequently dried to form the film. In a specific example, the ingredients of the film are water soluble or dispersible or modified to become water soluble or dispersible (i.e., solubilized). The ingredients are mixed together into an aqueous solution (i.e., water is the carrier solvent or medium) that is then air dried under ambient room temperature and humidity to form the film. Alternatively, the ingredients of the film could be soluble in an organic solvent carrier. The ingredients of the film may be mixed together in any order.

The film-forming mixture should be relatively easy to manufacture and use. The viscosity of the film-forming mixture should be sufficiently low to permit application and spreading of the mixture onto a substrate without the need for any high-force application techniques or equipment. For example, the viscosity of the film-forming mixture may range from about 10 cps to about 200 cps.

Chitosan is soluble in aqueous organic or mineral acids. Suitable aqueous organic acids include acetic acid, sorbic acid, propionic acid, lactic acid, glutamic acid, benzoic acid, citric acid, maleic acid, glycolic acid, acrylic acid, succinic acid, oxalic acid, ascorbic acid, tartaric acid, and mixture thereof. Typically, the organic acid is very dilute such as, for example, a concentration of about 0.5 to about 5, more particularly about 1 to about 2, weight percent depending upon the particular type of acid.

In general, a predetermined amount of chitosan is dissolved under ambient room temperature in an aqueous organic acid to produce a chitosan salt solution. The pH of the mixture may be about 2.5 to about 6.3, more particularly about 5.0 to about 6.0. The amount of chitosan dissolved in the aqueous acid may range from about 1 to about 5, more particularly about 2, weight percent, based on the weight of the water and depending upon the desired amount of chitosan in the film end product. The chitosan salt solution also may include any of the above-described optional ingredients such as a plasticizer.

The lysozyme then can be added to the chitosan salt solution. The lysozyme may be added in the form of a neat, industrial grade, food grade or pharmaceutical grade solution that are available from various commercial suppliers. Alternatively, lysozyme stock solution may be prepared by dissolving a predetermined amount of lysozyme into distilled water. The amount of lysozyme dissolved in the water may range from about 5 to about 20, more particularly about 10 to about 15, weight percent based on the weight of the water and depending upon the desired concentration of lysozyme in the film end product. If the amount of lysozyme is too great, the film-forming solution may become unacceptably dilute which could adversely affect the film properties. The lysozyme stock solution also may include any of the above-described optional ingredients such as a plasticizer.

The chitosan salt solution and the lysozyme stock solution are mixed together under ambient room conditions resulting in a film-forming solution. Alternatively, the film-forming solution may be heated at, or to, a temperature of up to about 50°C to enhance dissolution. The amount of the chitosan salt solution relative to the amount of the lysozyme stock solution is selected to provide the desired concentration of lysozyme. The pH of the resulting aqueous film-forming solution may be adjusted to be in the range of about 5 to about 6 for protecting food by providing a low acidity condition.

The film could be applied to a food article by any method. The film is formed from the film-forming solution by applying the film-forming solution to a substrate. For example, the film-forming solution could be sprayed or brushed onto the surface to form a protective coating, or the food article may be dipped into the film-forming solution. Alternatively, a cast film could be applied to the surface of the food article via wrapping or similar methods. The solution-coated substrate may be heated at a temperature of about 25°C to about 65°C for about 2 hours to about 48 hours to form the film. In the variant involving directly coating a food article, the drying time typically will be shorter (for example, about 5 to about 60 minutes with forced air).

The duration of the film's antimicrobial activity depends on the environmental conditions. In high-moisture conditions, the migration rate of the coating components into the food article will increase, thus decreasing the effective duration of antimicrobial activity. In certain examples, the films may remain intact (i.e., the film retains its color, dimension and mechanical strength) for up to about four months in ambient room conditions. In other examples, the antimicrobial activity could remain for up to about three weeks.

The amount of coating applied to a food article surface should be sufficient to form a substantially continuous film on the surface. The amount varies depending upon a variety of factors including type of food article, application method and desired properties but it could range from about 2 to about 30, more particularly about 5 to about 10, mg/cm$^2$ substrate surface area. According to certain examples, the stand alone film should have a thickness of at least about 20 $\mu$m, more particularly about 30 to about 80 $\mu$m. A thickness of less than 20 $\mu$m is illustrative for coatings formed directly on the food surface (e.g., by dipping).

The design of the films disclosed herein is particularly targeted toward inhibiting pathogenic and spoilage bacteria and fungi on food surface. Illustrative bacteria include *Lactobacilus plantarum, Listeria monocytogenes, Escherichia coli, Staphylococcus aureus, Clostridium botulinum, Salmonella* spp., and *Pseudomonas* spp. Illustrative fungi include *Aspergillus niger, Monoilinia fructicola, Botrytis cinerea,* and *Rhizopus* spp.

The food articles that can be protected as described herein are generally those that may be vulnerable to quality deterioration caused by microbial growth, dehydration (loss of water), and/or ripening due to respiration. Typically, cheese (sliced or brick) and processed meat products (ham, hotdog, sausage, etc.) may be wrapped using developed films or coated using the film-forming solution. Perishable fruit and vegetable commodities, such as berries, cherries, grapes, apples, pears, nectarines, plums, and apricots, may be coated to enhance microbial safety and extend the shelf-life of the product.

The film exhibits desirable water vapor permeability characteristics. For example, the water vapor permeability of the film may range from about 1 to about 300, more particularly about 10 to about 100 g mm/m$^2$ d kPa. The water vapor permeability and the mechanical properties of the film may depend upon the relative humidity (RH) during film formation since water can act as a plasticizer in chitosan films. In low RH conditions (for example, below 40%), the films are relatively good gas barrier materials with improved water barrier characteristics. In 50% RH, the films may demonstrate moderate mechanical properties (for example, 10 to 100 MPa in tensile strength and 10 to 50% in elongation at break) comparable to commercially-available low density polyethylene (LDPE) film. The water barrier properties of the films can be improved by adding lipid materials.

## EXAMPLES

The specific examples described below are for illustrative purposes and should not be considered as limiting the scope of the appended claims.

### Example 1

#### Materials

Shrimp chitosan from Vanson Inc. (Redmond, WA) was used without further purification. The shrimp chitosan was characterized by 11 cps viscosity of a 1% w/w aqueous acetic acid solution at 25°C and 89.9% deacetylation. Hen egg white lysozyme was obtained from Eiprodukte GmbH und Co. (Germany). USP (United States Pharmacopeia) grade glycerol was obtained from EM Science (Darmstadt, Germany). Reagent grade glacial acetic acid was obtained from J. T. Baker (Phillipsburg, NJ).

A Gram-positive *Streptococcus faecalis ATCC 14508* and a Gram-negative *Escherichia.coli* type B were used as test organisms. Lyophilized *Micrococcus lysodeikticus* obtained from Sigma Chem. Co. (St. Louis, MO) was used for lysozyme release pattern measurement. Brain heat infusion (BHI) broth, MRS-broth and agar were purchased from Difco of Becton, Dickinson and Company (Sparks, MD).

#### Preparation of Film-Forming Solutions

Film-forming solutions (FFS) were prepared by mixing a chitosan solution with a lysozyme solution. The chitosan solution was prepared by dissolving 2 wt% chitosan in a 1 wt% acetic acid solution with addition of 25% glycerol (w/w chitosan). The lysozyme solution was prepared by dissolving 10 wt% lysozyme in distilled water with addition of 25 % glycerol (w/w lysozyme). The lysozyme solution was then mixed into the chitosan solution at a concentration of 0, 20, 60 or 100% (percent dry weight of lysozyme per dry weight of chitosan). The resulting mixtures were homogenized at 3,000 rpm for 60 seconds in a Model PT 10-35 (Kinematica AG, Switzerland). The pH of the FFSs was adjusted to 5.2 with 5 N sodium hydroxide. All sample solutions were filtered through nylon mesh to remove insoluble residues and degassed under vacuum (Model 0211-P204, Gast Mfg. Corp., Benton Harbor, MI).

#### Film Formation

A calculated amount of each degassed FFS was cast on a leveled Teflon-coated glass plate with an area of 260 x 260 mm to achieve a uniform film thickness of about 70 $\mu$m. After drying at room conditions (24 $\pm$ 2°C and 40 $\pm$ 5% relative humidity) for 2 days, the dried films were peeled out from the plates and cut into pieces for analysis. Film segments measuring 25 x 25 mm were used for density and moisture content evaluation. Film segments measuring 25 x 86 mm were used for mechanical testing. Film segments measuring 70 x 70 mm were used for water vapor permeability testing. Prior to all measurements, the film pieces were conditioned in an environmental chamber (Model T10RS, Tenney Environmental, Williamsport, PA) set at 25°C and 50% relative humidity for at least 2 days.

#### Measurement of Film Thickness, Density and Moisture Content

After conditioning at 25°C and 50% for 2 days, the thickness of the films was measured at five random locations for each film specimen using a caliper micrometer Model No. 293-766-30 (Mytutoyo Manufacturing Co. Ltd., Japan). Film density was calculated by dividing film weight by film volume. The moisture content of the films was determined gravimetrically by drying film specimens at 105°C for 18 hours in a forced-air oven (Precision Scientific Inc., Chicago, IL). The percentage of moisture content was calculated in a wet base.

#### Lysozyme Release Assay

Samples of about 0.03 g of the lysozyme-chitosan film specimen were submerged into 20 ml of 0.15 M phosphate buffer (pH 6.2) in vials and shaken at 50 rpm using a shaker (New Brunswick Scientific Co. Inc., New Brunswick, NJ) at room temperature. A stock substrate solution of lyophilized *M. lysodeikticus* was prepared in 0.15 M phosphate buffer solution (absorbance of 0.65 at 450 nm). Samples of 1 $\mu$l of the mixture were taken at time intervals of 0, 0.25, 1, 4, 12, 24, and 48 hours. These samples were mixed with 2.5 ml of *M. lysodeikticus* substrate in a cuvette and then immediately read for 40 seconds at 25°C using a Shimadzu UV-Vis 2100 spectrophotometer (Shimadzu Co., Japan). Activity rates of lysozyme were determined by measuring the decrease in solution absorbance at 450 nm, which reflects the hydrolysis of the cell wall substrate. Decreasing optical density was expressed as a change in Mille-absorbance units per minute (M abs/min). Activity units were converted to mg/l lysozyme based on regression lines with standardized lysozyme concentrations in 0.15 M phosphate buffer and then to g lysozyme released per g dry film.

*Antimicrobial Activity*

*E. coli* and *S. faecalis* were grown at 37°C overnight in brain heat infusion (BHI) broth and MRS broth, respectively. One ml samples of these microorganisms were diluted with 99 ml of the same broths to obtain approximately $10^7$ CFU/ml inoculums. About 0.03 g of each film specimen was placed in a petri dish (85 mm diameter), into which 10 ml of inoculums was then poured. Inoculum without exposure to the film was used as a control. The petri dishes were shaken at 50 RPM at room temperature. Samples were taken at 0, 6, 12, and 24 hours, diluted with dilution vials (Dilu-Lock II™ Butterfield's Buffer, Hardy Diagnostics, Santa Maria, CA), and plated in duplicate. For plating, BHI and MRS agars were used for *E. coli* and *S. faecalis,* respectively. Each plate was incubated at 37°C for 48 hours before counting the number of colonies.

*Measurement of Water Vapor Permeability*

Water vapor permeability (WVP) was determined using a cup method at 25°C and 100/50% RH gradient, following ASTM E 96 (ASTM 2000a). Eleven ml of distilled water was placed in each test cup made of Plexiglas® with an inside diameter of 57 mm and an inner depth of 15 mm. The distance between the water and the film was 10.7 mm and the effective film area was 25.5 cm$^2$. Test cup assemblies were placed in the temperature and humidity controlled chamber (25°C and 50% RH). Each cup assembly was weighed every hour for 6 hours using the electronic balance (0.0001 g accuracy) to record moisture loss over time. WVP was then corrected for resistance of the stagnant air gap between the film and the surface of water using the WVP correction method (Gennadios and others 1994).

*Mechanical Properties*

Mechanical properties of the films were determined using a texture analyzer (TA.XT2i, Texture Technologies Corp., Scarsdale, NY). All property measurements were performed immediately after removing the film specimens from the chamber to minimize moisture variances. The ASTM D882 method (ASTM 2000b) was used for measuring tensile strength (TS) and percent elongation at break (EL). Each film specimen was mounted between the grips (TA 96) of the texture analyzer and tested with initial grip separation of 50 mm and crosshead speed of 1 mm/s. TS values were reported as measured maximum load (N) divided by film cross-sectional area (mm$^2$) with a unit of MPa. EL values were obtained by recorded elongation at break divided by the initial length of the specimen and multiplied by 100.

*Microstructure*

The surface and internal structure of the films were evaluated using a Scanning Electron Microscopy (AmRay 3300FE field emission SEM, AmRay, Bedford, MA). The film pieces were mounted on aluminum stubs and coated with gold-palladium alloy using a sputter coater (Edwards model S 150B Sputter Coater; BOC Edwards Vacuum, Ltd, UK). Each coated sample was examined using a voltage of 5 kV with the electron beam directed normal to the samples.

*Statistical Analysis*

All experiments were replicated three times. In each replication, two film specimens were used for lysozyme release and antimicrobial activity measurements; five film samples were used for density, moisture content, and WVP measurements; and 10 film samples were used for mechanical property measurements. The general linear models (GLM) procedure was applied in testing differences among different films using the SAS (Statistical Analysis System Institute Inc., Cary, NC). PROC GLM for analysis of variance (ANOVA) was performed for all treatments. PROC REG was performed to find fitting regression models for measured responses. Duncan's multiple-range test was used for the multiple means comparisons. The significance of difference was defined at $p < 0.05$.

*Results - Film Formation and Basic Physical Properties*

When integrating lysozyme into chitosan solutions, no precipitations were observed in any of the FFSs. This demonstrated that acetic acid-dissolved chitosan solutions have good compatibility with water-soluble lysozyme. All dried films were easy to peel off from the casting plates. The thickness of all types of films was carefully controlled in a range of $72 \pm 11$ μm by casting a calculated amount of FFSs. This ensured that no statistical differences in film thickness were observed ($p < 0.05$).

Table 1 below shows the density and moisture content of each tested film (n=15). Pure chitosan film (L0) had the highest values in both density and moisture content. Density was not statistically different among all of the films. Moisture content tended to decrease with increased lysozyme concentration. Although not bound by any theory, this may occur because both chitosan and lysozyme contain a large number of -OH and -NH$_2$ groups. Hydrogen bonding is the main attraction force among these groups. The addition of lysozyme molecules into chitosan chains could alter the structural configuration of chitosan molecules by increasing interactions between chitosan and lysozyme molecules, such as hydrogen bonding and van der Waals interactions. Lysozyme contains both hydrophilic and hydrophobic amino acids. During film formation, a lysozyme hydrophobic core may be formed with hydrophilic amino acid side chains protruding toward the aqueous FFS by the same hydrophobic interactions that play important role in folding the lysozyme (Proctor and Cunningham 1988). These hydrophobic side chains in the film matrix may affect the moisture content of the lysozyme-chitosan composite films.

**Table 1: Composition and Physical Properties of Lysozyme-Chitosan Composite Films**

| Film Type[1] | Composition | | Density (g/ml) | Moisture Content (%) |
|---|---|---|---|---|
| | Lysozyme (%, w/w chitosan) | Glycerol (%, w/w)[2] | | |
| L0 | 0 % | 25 | 1.34±0.09 | 23.6 ± 2.4 |
| L20 | 20% | 25 | 1.30 ± 0.05 | 21.7±3.0 |
| L60 | 60% | 25 | 1.30 ±0.04 | 19.0 ± 3.5 |
| L100 | 100% | 25 | 1.31 ±0.06 | 18.8 ± 2.8 |

[2] Film Thickness = 72.6 ± 8.2 µm L0 = 0% lysozyme (w/w chitosan); L20 = 20% lysozyme (w/w chitosan); L60 = 60% lysozyme (w/w chitosan); L100 = 100% lysozyme (w/w chitosan)
[2] Weight percent glycerol based on the sum of chitosan weight and lysozyme weight in the FFS

*Results - Release of Lysozyme*

The amount of lysozyme released from the film matrix is shown in FIG. 1. Chitosan films without lysozyme (L0 did not show any lytic activities against lyophilized *M. lysodeikticus,* while these activities proportionally increased with increased concentration of lysozyme incorporated into the film matrix. When lysozyme-chitosan composite films were placed in the phosphate buffer solution, the films were swollen as a result of the diffusion of water molecules into the polymeric film structure, leading to the release of incorporated lysozyme into the aqueous environment from the film matrix. Lysozyme was logarithmically released from the film matrix over time. The release of lysozyme from the film matrix was linearly correlated with the initial lysozyme concentration in the polymeric matrix. The percentage of release amount of lysozyme from each film specimen after 48 hours was approximately 65%, 79%, and 76% for L20, L60, and L100 films, respectively. The percentage of release amount of lysozyme from each film specimen after 24 hours was approximately 48%, 75%, and 71% for L20, L60, and L100 films, respectively. The percentage of release amount of lysozyme from each film specimen after 12 hours was approximately 43%, 60%, and 56% for L20, L60, and L100 films, respectively. The percentage of release amount of lysozyme from each film specimen after 1 hour was approximately 14%, 26%, and 25% for L20, L60, and L100 films, respectively.

In semi-moist foods, microbial growth occurs mainly on the surface of the food. Therefore, keeping desired levels of antimicrobials on the food surface with controlled and delayed diffusion could be beneficial for extending shelf-life of foods. These results demonstrate that lysozyme incorporated into chitosan films can be released from the film matrix in a controlled manner with retained lytic activity against bacterial cell wall substrate. For example, after about 24 hours up to about 30% of the lysozyme has not been released from the film. After about 48 hours up to about 20% of the lysozyme has not been released from the film.

*Results - Antimicrobial Activity*

FIGS. 2A and 2B show the survival of *E. coli* and *S. faecalis* in broth treated with lysozyme-chitosan films. The antimicrobial efficacies of lysozyme-chitosan composite films against *E. coli* increased with increased lysozyme concentrations, except with the L100 films. After 24 hours of incubation, cell numbers were reduced about 1.8, 2.3, and 2.7 log cycles in BHI broth with L0, L20, or L60 films, respectively. At the same time, cell numbers were increased about 0.1 and 2.3 log cycles with the L100 film and control, respectively. The L100 films inhibited the growth up to 6 hours followed by recovery of the cell population.

The growth of *S. faecalis* was not effectively inhibited by the lysozyme-chitosan composite films containing low concentration of lysozyme (L0 and L20 films). With the L0 and L20 films, the *S. faecalis* population slightly increased during 24 hours of exposure. In contrast, 3.3 and 3.8 log reductions of *S. faecalis* were observed in the broths containing L60 and L100 films, respectively. About a 1.1 log cycle increase occurred in the control samples after 24 hours. The increase in antimicrobial activity against Gram-positive S. *faecalis* with increased lysozyme concentration may indicate that the lysozyme is primarily responsible for this effect.

The antimicrobial activities of chitosan against *E. coli* have been reviewed by Shahidi (1999). Pure chitosan films (L0 showed bactericidal action against Gram-negative *E. coli,* but little inhibition effect on the growth of Gram-positive *S. faecalis.* The most stable inhibition trend against both bacteria was observed in L60 films. The recovery of the *E. coli* population with the L100 films is suspicious, and may be explained by increased lysozyme-chitosan interactions. Chitosan molecules released from the film matrix may stack up on the surfaces of the cells or interact with lysozyme to form lysozyme-chitosan complexes. When an excess amount of lysozyme is exposed to the cell suspension, the probability of lysozyme-chitosan interactions may increase. An increase in these interactions may interfere with the reaction between chitosan and the cell surfaces.

The strongest antimicrobial activity against *S. faecalis* was exhibited in chitosan films containing the highest lysozyme concentration (L100), while for *E. coli* it was in the films with 60% lysozyme concentration (w/w chitosan). These results indicate that the antimicrobial activity of chitosan can be enhanced by incorporation of lysozyme into the chitosan film matrix. Furthermore, the ratio of lysozyme to chitosan molecules is an important factor affecting the antimicrobial behavior of the lysozyme-chitosan composite films.

*Results - Water Vapor Permeability*

The water vapor permeability (WVP) of the films was not significantly affected by incorporation of lysozyme at the tested concentration levels ($p < 0.05$) (see Table 2 below). Although not bound by any theory, this result could be explained by the effect of two opposing factors. Chitosan films, like many other protein or polysaccharide edible films, exhibit relatively low water barrier characteristics due to their hydrophilic nature. The water barrier property of chitosan film can be improved by the addition of hydrophobic materials, such as fatty acids. Since lysozyme contains hydrophobic amino acid side chains, the hydrophilicity of lysozyme-chitosan composite films may decrease with the addition of lysozyme. However, the compact structure of chitosan, especially its crystalline parts, may be disrupted by the lysozyme molecule, resulting in increased WVP through the film matrix. These two opposing factors may offset or minimize variation in WVP characteristics of lysozyme-chitosan composite films with varying lysozyme concentrations.

**Table 2: Water Vapor Permeability of Lysozyme-Chitosan Composite Films**

| Film Type[1] | Thickness (μm) | WVP (gmm/m$^2$d kpa) |
|---|---|---|
| L0 | 72.5±13.4 | 177.2 ± 47.4 |
| L20 | 68.8 ± 6.6 | 157.4 ± 26.5 |
| L60 | 70.9 ± 4.4 | 160.0 ± 23.9 |
| L100 | 69.0 ± 9.8 | 166.2 ± 22.2 |

[1] L0 = 0% lysozyme (w/w chitosan); L20 = 20% lysozyme (w/w chitosan); L60 = 60% lysozyme (w/w chitosan); L100 = 100% lysozyme (w/w chitosan)

*Results - Mechanical Properties*

Tensile strength (TS) and percent elongation at break (EL) of the films significantly decreased ($p > 0.05$) with the addition of lysozyme (see Table 3 below). Both TS and EL reductions with increased lysozyme concentration can be described by the following linear equations:

$$\text{TS} = -0.10 \cdot C_I + 16.70, \ R^2 = 0.96$$

$$\text{EL} = -0.32 \cdot C_I + 59.89, \ R^2 = 0.99$$

where $C_1$ is the percent concentration of lysozyme in the lysozyme-chitosan film matrix (%, w/w chitosan). In addition, it was found that there is a linear relationship between EL and TS:

$$EL = 3.07\,TS + 8.30, R^2 = 0.98.$$

At 1:1 chitosan and lysozyme ratio (L100), there were 43% and 48% reductions in TS and EL values, respectively. However, such reductions are not sufficiently significant to prevent the use of the films as a food protectant.

Chitosan is an excellent film forming linear polymer with a rigid backbone structure, while lysozyme is a positively charged enzyme with less film forming capacity. The reductions in both TS and EL indicate that the incorporation of lysozyme weakened the film structure and integrity. Introduction of lysozyme molecules into the chitosan film matrix possibly disrupts the crystalline structure formation and weakens intermolecular hydrogen bonding among the chitosan molecules. Increased interactions between chitosan and lysozyme molecules in the film matrix may be responsible for the changes in TS and EL of lysozyme-chitosan composite films. The decreased TS and EL values may also be attributed to the degradation of chitosan molecules by lysozyme, which is a chitinolyic enzyme. The degradation of chitosan molecules by lysozyme can be reduced by using highly deacetylated chitosan (e.g., a degree of deacetylation of at least about 95%). In addition, the mechanical properties and water barrier properties of lysozyme-chitosan composite films may be improved by the use of cross-linking agents in the film matrix, such as glutaraldehyde.

**Table 3: Mechanical Properties of Lysozyme-Chitosan Composite Films**

| Film Type[1] | Thickness ($\mu$m) | Tensile Strength (MPa) | Elongation (%) |
|---|---|---|---|
| L0 | 74.9 $\pm$ 15.5 | 17.4 $\pm$ 4.6 | 60.3 $\pm$ 16.2 |
| L20 | 70.8 $\pm$ 9.2 | 14.4 $\pm$ 3.4 | 53.8 $\pm$ 9.0 |
| L60 | 73.0 $\pm$ 8.9 | 9.5 $\pm$ 2.3 | 39.3 $\pm$ 11.7 |
| L100 | 69.9 $\pm$ 9.2 | 7.4 $\pm$ 1.5 | 29.1 $\pm$ 8.2 |

[1] L0 = 0% lysozyme (w/w chitosan); L20 = 20% lysozyme (w/w chitosan); L60 = 60% lysozyme (w/w chitosan); L100 = 100% lysozyme (w/w chitosan)

*Results - Microstructure*

Excellent biocompatibilities between chitosan and lysozyme and a homogeneous distribution of lysozyme throughout the chitosan matrix were confirmed by SEM microphotographs. FIGS. 3A - 3D show the outer surface of lysozyme-chitosan composite films exposed to air during film formation at a magnification of 1000X. As shown in the SEM micrographs, the surface structures of the films were compact and uniform. All of the films had a homogeneous appearance indicating continuous structures without any pores or cracks in the matrix. The microphotographs of L60 (3C) and L100 (3D) films show bright marbling on the film surface. This marbling was uniformly distributed and increased with increasing concentrations of lysozyme. The white areas could represent the deposition of lysozyme micro-particles in the chitosan matrix.

FIGS. 4A - 4D show the micrographs of cross-sections in lysozyme-chitosan composite films. Sharp edges were obtained by freezing the films with liquid nitrogen and then breaking them. As shown in FIGS. 4A-4D, there were no vertical cracks or phase separation between the chitosan and the lysozyme. The cross-section structures were compact and continuous except for some fractures parallel to surfaces, which may have been formed when the films were broken. The uniform distribution of lysozyme throughout the film matrix is indicated by the homogeneous appearance of the films with high lysozyme concentrations (4C and 4D). The micrograph of the L20 film (4B) shows foreign material that may have fallen onto the film during drying. This type of contamination could be a disadvantage of solvent evaporation film forming methods, especially if the films are cast and dried in an open air environment.

**Prophetic Example 2**

An alternative FFS could be prepared by dissolving 2 wt% chitosan in a 1 wt% acetic acid solution with the addition of 50 wt% lauric acid, 25 wt% glycerol and 100 wt% lysozyme (w/w chitosan) at 65°C. The film would then be prepared as described in Example 1. The addition of a fatty acid (i.e., lauric acid) to the film-forming solution may improve the water barrier properties of the film without significantly affecting its antimicrobial activity.

**Example 3**

Coating solutions were prepared by mixing a chitosan solution with a lysozyme solution. The chitosan solution was prepared by dissolving 3% chitosan in a 1% acetic acid solution with addition of 25% glycerol (w/w chitosan). The lysozyme solution was prepared by dissolving 10% lysozyme in distilled water with addition of 25% glycerol (w/w lysozyme). The lysozyme solution was mixed into the chitosan solution to a concentration of 60% (percent dry weight of lysozyme per dry weight of chitosan). The resulting mixture was homogenized using a homogenizer (PT 10-35, Kinematica, Switzerland) at 3,000 rpm for 60 seconds. *Listeria monocytogenes* ATCC 15313 and *Lactobacillus plantarum* were used as test microorganisms to evaluate antimicrobial efficacies of the coating treatments on food surfaces. *L. monocytogenes* and *L. plantarum* were grown at 37°C overnight in brain heat infusion (BHI) broth and MRS broth, respectively.

Commercially manufactured beef franks (Bun-Length, Oscar Mayer Foods Corp., Madison, WI) were obtained and cut into 26 mm lengths (~10 g) under aseptic conditions. Sliced beef franks were dipped into the coating solution for 30 seconds and dried for 30 minutes in a vertical laminar air flow bench (100-plus, Envirco Corp., Albuquerque, New Mexico). A non-coated control and coated samples were inoculated with 100 μl of *L. monocytogenes* or *L. plantarum* (~ 2 x 10$^3$ CFU/ml), placed in a 200 mm x 150 mm vacuum plastic bag (FoodSaver Rolls, Tilia, Inc., San Francisco, CA), and vacuum packaged with a heat sealer (FoodSaver Vac 1075, Tilia, Inc., San Francisco, CA).

After 4 days of storage at 22.5 ± 1°C, each beef frank sample was placed in a sterile stomacher bag. The vacuum plastic bag was rinsed with 90 ml of 0.1% peptone water and transferred into the same stomacher bag. The samples were macerated with Stomacher type pulverizer (Stomacher 400 Circulator, Seward, London, UK) at 230 RPM for 2 minutes. The suspensions were enumerated for microbial populations in duplicate. BHI agar and MRS agar were used for *L. monocytogenes* and *L. plantarum,* respectively. Plastic Petri Plates containing microbial media were incubated at 37°C for 48 hours before counting the number of microbial colonies.

The effects of coating treatments on the growth of *L. monocytogenes* or *L. plantarum* inoculated on the surface of coated and non-coated beef franks are shown in Table 4. Lysozyme-chitosan composite coating treatments resulted in growth inhibition of *L. monocylogenes* on the beef frank surface. However slight increases in *L. plantarum* cell numbers were observed under the same conditions.

**Table 4: Effect of Coatings on Microbial Growth of Beef Franks Inoculated with *L. Monocytogenes* or *L. Plantarum.***

| Microorganism | Treatment | Log CFU/g Beef Frank | |
|---|---|---|---|
| | | 0 day | 4 day |
| *L. monocytogenes* | Non-coated | 2.39 | 3.74 |
| | Coated | 2.39 | 0 |
| *L. plantarum* | Non-coated | 3.15 | 4.27 |
| | Coated | 3.15 | 4.74 |

## Example 4

Commercially manufactured medium cheddar cheese (Tillamook County Creamery Association, Tillamook, OR) was used as another food system for demonstrating the antimicrobial properties of the lysozyme-chitosan composite coating application. Cheese bricks were aseptically cut to a dimension of 60 mm x 26 mm x 5 mm (~10 g) and coated with the coating solution described in Example 3. All procedures were identical to Example 3. As shown in Table 5, the growth of *L. monocylogenes* and *L. plantarum* on the surface of cheese slices were both inhibited.

**Table 5. Effect of Coatings on Microbial Growth of Sliced Cheddar Cheese Inoculated with *L.monocytozenes* or *L. plantarum***

| Microorganism | Treatment | Log CFU/g Cheese | |
|---|---|---|---|
| | | 0 day | 4 day |
| *L. monocytogenes* | Non-coated | 4.99 | 4.35 |
| | Coated | 4.99 | 4.09 |
| *L. plantarum* | Non-coated | 5.06 | 4.60 |
| | Coated | 5.06 | 4.06 |

## Example 5

Lysozyme chitosan solutions were prepared following the method described in Example 1, except that 2% chitosan was used instead of 3% chitosan. The film forming solution was cast on a leveled Teflon-coated glass plate with an area of 260 mm x 260 mm and dried under ambient conditions (22.5 $\pm$ 1°C and 40 $\pm$ 5% Relative Humidity {RH}) for 2 days. The dried films were removed from the plates and cut into pieces with dimensions of 65 x 30 mm. The thickness of the produced films was 85 $\pm$ 9 $\mu$m. Film pieces were stored in an environmental chamber (T10RS, Tenney Environmental, Williamsport, PA) set at 25°C and 50% RH for 2 days.

Cheddar cheese (Tillamook County Creamery Association, Tillamook, OR) was aseptically cut to a rectangular dimension of 60 mm x 26 mm x 5 mm and inoculated with 100 $\mu$l of *L. monocytogenes* or *L. plantarum* ($\sim$ 2 x10³ CFU/ml). Each inoculated cheese slice was sandwiched between two equivalent treatment film pieces. Commercially manufactured beef franks (Bun-Length, Oscar Mayer Foods corp., Madison, WI) were obtained and cut into 26 mm length (~10 g) under aseptic conditions and vacuum packaged in a 200 mm x 150 mm vacuum plastic bag (FoodSaver Rolls, Tilia, Inc., San Francisco, CA). Storage conditions and microbial enumeration were the same procedures described in Example 3.

As shown in Table 6, lysozyme-chitosan composite films reduced microbial growth on the cheese surfaces. *L. plantarum* was more sensitive to the films than L. *monocytogenes.* Film treatments showed stronger antimicrobial activities than coating treatments with the cheese surface examples

**Table 6. Effect of Film Applications on Microbial Growth of Sliced Cheddar Cheese Inoculated with *L. monocytogenes* or *L. plantarum***

| Microorganism | Treatment | Log CFU/g Cheese | |
| --- | --- | --- | --- |
| | | 0 day | 4 day |
| *L. monocytogenes* | Non-coated | 4.99 | 4.35 |
| | Coated | 4.99 | 3.60 |
| *L. plantarum* | Non-coated | 5.06 | 4.60 |
| | Coated | 5.06 | 1.39 |

Having illustrated and described the principles of the disclosed methods, films and food articles with reference to several examples, it should be apparent that these methods, films and food articles may be modified in detail without departing from such principles.

## Claims

1. A composite film comprising lysozyme incorporated within a chitosan polymer matrix.

2. The film of claim1 wherein all the components of the film are edible and renewable.

3. The film of claim1 or of claim 2, wherein the chitosan has a degree of deacetylation of at least about 70%.

4. The film of any one of the preceding claims wherein the chitosan comprises chitosan acetate, chitosan sorbate, chitosan propionate, chitosan lactate, chitosan glutamate, chitosan benzoate, chitosan citrate, chitosan maleate, chitosan glycolate, chitosan acrylate, chitosan succinate, chitosan oxalate, chitosan ascorbate, chitosan tartarate, or mixtures thereof.

5. The film of any one of the preceding claims, wherein the lysozyme is present in an antimicrobial effective amount.

6. The film of any one of the preceding claims, wherein the film has a water vapor permeability of about 1 to about 300g mm/m² d kPa.

7. The film of any one of the preceding claims, wherein the amount of lysozyme is sufficient so that about 24 hours after application of the film to a substrate up to about 30% of the lysozyme has not been released from the film, and after about 48 hours up to about 20% of the lysozyme has not been released from the film.

8. The film according to claim 1 comprising about 10 to about 200 weight percent lysozyme, based on the weight of the chitosan.

9. The film of claim 8, comprising about 10 to about 100 weight percent lysozyme.

10. The film of any one of the preceding claims, further comprising at least one additional component selected from a plasticizer or a crosslinking agent.

11. The film of claim 10 further comprising at least one plasticizer and at least one crosslinking agent.

12. The film of claim 10 or claim 11, wherein the plasticizer is present in an amount of about1 to about 50 weight percent, based on the weight of chitosan.

13. A method for making a film, comprising :

dissolving or dispersing chitosan and lysozyme in an aqueous medium resulting in a film-forming solution or dispersion ;
applying the film-forming solution or dispersion to a substrate surface ; and
converting the film-forming solution or dispersion into a film.

14. The method of claim13, wherein the chitosan is dissolved in an aqueous organic acid.

15. The method of claim14, wherein the aqueous organic acid is selected from acetic acid, sorbic acid, propionic acid, lactic acid, glutamic acid, benzoic acid, citric acid, maleic acid, glycolic acid, acrylic acid, succinic acid, oxalic acid, ascorbic acid, tartaric acid, or mixtures thereof.

16. The method of claim14 or claim 15, wherein the lysozyme is dissolved in water resulting in a lysozyme solution, and then the lysozyme solution is mixed with the chitosan solution, or wherein the lysozyme is dissolved in water resulting in a lysozyme solution, and then the lysozyme solution is mixed with the chitosan solution, wherein the mixing of the lysozyme solution and the chitosan solution occurs under ambient room conditions.

17. The method of claim16, wherein the lysozyme solution includes about 5 to about 20 weight percent lysozyme.

18. The method of any one of claims 13 to 17, wherein the converting of the film-forming solution or dispersion into the film occurs via drying.

19. The method of any one of claims 13 to 18, wherein the substrate surface comprises the surface of a food article.

20. The method of claim 19, wherein the film includes an antimicrobial effective amount of lysozyme, and the anti-microbial activity of the film lasts for at least three weeks.

21. The method of any one of claims 13 to 20, further comprising dissolving or dispersing at least one other additive into the aqueous medium.

22. The method of any one of claims 13 to 21, further comprising disposing the film onto a food article surface.

23. The method of claims 19 or 20, wherein the film-forming solution or dispersion is applied to the food article surface via spraying, brushing, dripping or dipping.

24. A film produced by the method of any one of claims 13 to 23.

25. The film of claim 24, wherein the lysozyme is present in the film in an antimicrobial effective amount.

26. A food article that includes an antimicrobial film on at least a portion of a surface of the food article, wherein the antimicrobial film comprises lysozyme incorporated within a chitosan polymer matrix.

27. The food article of claim 26, wherein the lysozyme is present in the film in an amount of about 10 to about 200 weight percent, based on the weight of the chitosan.

28. The food article of claim 26, wherein the film has a water vapor permeability of about1 to about 300g mm/m$^2$ d kPa.

29. The food article of any one of claims 26 to 28, wherein the film is made by a method comprising: dissolving or dispersing chitosan and lysozyme in an aqueous medium resulting in a film-forming solution or dispersion; applying the film-forming solution or dispersion to a substrate surface; and converting the film-forming solution or dispersion into a film.


**Patentansprüche**

1. Verbundfilm umfassend Lysozym, das in einer Chitosan-Polymermatrix eingebunden ist.

2. Der Film von Anspruch 1, wobei alle Komponenten des Films essbar und erneuerbar sind.

3. Der Film von Anspruch 1 oder Anspruch 2, wobei das Chitosan einen Deacetylierungsgrad von wenigstens etwa 70% besitzt.

4. Der Film von einem der vorstehenden Ansprüche, wobei das Chitosan Chitosanacetat, Chitosansorbat, Chitosanpropionat, Chitosanlactat, Chitosanglutamat, Chitosanbenzoat, Chitosancitrat, Chitosanmaleat, Chitosanglycolat, Chitosanacrylat, Chitosansuccinat, Chitosanoxalat, Chitosanascorhat, Chitosantartrat oder Gemische davon umfasst.

5. Der Film von einem der vorstehenden Ansprüche, wobei das Lysozym in einer antimikrobiell wirksamen Menge vorhanden ist.

6. Der Film von einem der vorstehenden Ansprüche, wobei der Film eine Wasserdampfdurchlässigkeit von etwa 1 bis etwa 300 g mm./m.$^2$ d kPa besitzt.

7. Der Film von einem der vorstehenden Ansprüche, wobei die Menge an Lysozym ausreicht, damit etwa 24 Stunden nach dem Aufbringen des Films auf ein Substrat bis zu etwa 30% des Lysozyms nicht aus dem Film freigesetzt worden sind und nach etwa 48 Stunden bis zu etwa 20% des Lysozyms nicht aus dem Film freigesetzt worden sind.

8. Der Film gemäß Anspruch 1, umfassend etwa 10 bis etwa 200 Gewichtsprozent Lysozym, bezogen auf das Gewicht von Chitosan.

9. Der Film von Anspruch 8, umfassend etwa 10 bis etwa 100 Gewichtsprozent Lysozym.

10. Der Film von einem der vorstehenden Ansprüche, weiter umfassend wenigstens einen aus einem Weichmacher oder einem Vernetzungsmittel ausgewählten zusätzlichen Bestandteil.

11. Der Film von Anspruch 10, weiter umfassend wenigstens einen Weichmacher und wenigstens einem Vernetzungsmittel.

12. Der Film von Anspruch 10 oder Anspruch 11, wobei der Weichmacher in einer Menge von etwa 1 bis etwa 50 Gewichtsprozent, bezogen auf das Gewicht von Chitosan, vorliegt.

13. Ein Verfahren zur Herstellung eines Films, umfassend:

    Lösen oder Dispergieren von Chitosan und Lysozym in einem wässrigen Medium, was eine filmbildende Lösung oder Dispersion ergibt;
    Aufbringen der filmbildenden Lösung oder Dispersion auf eine Substratoberfläche; und
    Umwandeln der filmbildenden Lösung oder Dispersion in einen Film.

14. Das Verfahren von Anspruch 13, wobei das Chitosan in einer wässrigen organischen Säure gelöst wird.

15. Das Verfahren von Anspruch 14, wobei die wässrige organische Säure ausgewählt ist aus Essigsäure, Sorbinsäure, Propionsäure, Milchsäure, Glutaminsäure, Benzoesäure, Zitronensäure, Maleinsäure, Glycolsäure, Acrylsäure, Bernsteinsäute, Oxalsäure, Ascorbinsäure, Weinsäure oder Gemischen davon.

16. Das Verfahren von Anspruch 14 oder 15, wobei das Lysozym in Wasser gelöst wird, was eine Lysozymlösung ergibt, und dann die Lysozymlösung mit der Chitosanlösung gemischt wird, oder wobei das Lysozym in Wasser gelöst wird, was eine Lysozymlösung ergibt, und dann die Lysozymlösung mit der Chitosanlösung gemischt wird, wobei das Mischen der Lysozymlösung und der Chitosanlösung bei Raumtemperaturbedingungen auftritt.

17. Das Verfahren von Anspruch 16, wobei die Lysozymlösung etwa 5 bis etwa 20 Gewichtsprozent Lysozym einschließt.

18. Das Verfahren von einem der Ansprüche 13 bis 17, wobei das Umwandeln der filmbildenden Lösung oder Dispersion in den Film durch Trocknung auftritt.

19. Das Verfahren von einem der Ansprüche 13 bis 18, wobei die Substratoberfläche die Oberfläche eines Lebensmittelerzeugnisses umfasst.

20. Das Verfahren von Anspruch 19, wobei der Film eine antimikrobiell wirksame Menge Lysozym einschließt, und die antimikrobiell Aktivität des Films für wenigstens drei Wochen anhält.

21. Das Verfahren von einem der Ansprüche 13 bis 20, weiter umfassend das Lösen oder Dispergieren wenigstens eines weiteren Zusatzes in das wässrige Medium.

22. Das Verfahren von einem der Ansprüche 13 bis 21, weiter umfassend das Aufbringen des Films auf der Oberfläche eines Lebensmittelerzeugnisses.

23. Das Verfahren von Anspruch 19 oder 20, wobei die filmbildende Lösung oder Dispersion durch Sprühen, Bürsten, Tropfen oder Eintauchen auf der Oberfläche des Lebensmittelerzeugnisses aufgebracht wird.

24. Ein durch das Verfahren von einem der Ansprüche 13 bis 23 hergestellter Film.

25. Der Film von Anspruch 24, wobei das Lysozym in dem Film in einer antimikrobiell wirksamen Menge vorhanden ist.

26. Ein Lebensmittelerzeugnis, das einen antimikrobiellen Film auf wenigstens einem Teil einer Oberfläche des Lebensmittelerzeugnisses einschließt, wobei der antimikrobielle Film Lysozym umfasst, das in einer Chitosan-Polymermatrix eingebunden ist.

27. Das Lebensmittelerzeugnis von Anspruch 26, wobei das Lysozym in dem Film in einer Menge von etwa 10 bis etwa 200 Gewichtsprozent, bezogen auf das Gewicht von Chitosan, vorliegt.

28. Das Lebensmittelerzeugnis von Anspruch 26, wobei der Film eine Wasserdampfdurchlässigkeit von etwa 1 bis etwa 300 g mm/m$^2$ d kPa besitzt.

29. Das Lebensmittelerzeugnis von einem der Ansprüche 26 bis 28, wobei der Film durch ein Verfahren hergestellt ist, das umfasst:

Lösen oder Dispergieren von Chitosan und Lysozym in einem wässrigen Medium, was eine filmbildende Lösung oder Dispersion ergibt;
Aufbringen der filmbildenden Lösung oder Dispersion auf eine Substratoberfläche; und
Umwandeln der filmbildenden Lösung oder Dispersion in einen Film.

**Revendications**

1. - Film composite comprenant du lysozyme incorporé dans une matrice polymère de chitosane.

2. - Film selon la revendication 1, dans lequel tous les composants du film sont comestibles et renouvelables.

3. - Film selon la revendication 1 ou la revendication 2, dans lequel le chitosane a un degré de désacétylation d'au moins environ 70 %.

4. - Film selon l'une quelconque des revendications précédentes, dans lequel le chitosane comprend de l'acétate de chitosane, le sorbate de chitosane, le proprionate de chitosane, le lactate de chitosane, le glutamate de chitosane, le benzoate de chitosane, le citrate de chitosane, le maléate de chitosane, le glycolate de chitosane, l'acrylate de chitosane, le succinate de chitosane, l'oxalate de chitosane, l'ascorbate de chitosane, le tartrate de chitosane ou leurs mélanges.

5. - Film selon l'une quelconque des revendications précédentes, dans lequel le lysozyme est présent dans une quantité efficace antimicrobienne.

6. - Film selon l'une quelconque des revendications précédentes, dans lequel le film a une perméabilité à la vapeur d'eau d'environ 1 à environ 300 g mm/m$^2$ d kPa.

7. - Film selon l'une quelconque des revendications précédentes, dans lequel la quantité de lysozyme est suffisante pour qu'environ 24 heures après l'application du film sur un substrat jusqu'à environ 30 % du lysozyme n'aient pas été libérés du film, et qu'après environ 48 heures, jusqu'à environ 20 % du lysozyme n'aient pas été libérés du film.

8. - Film selon la revendication 1, comprenant environ 10 à environ 200 pour cent en poids de lysozyme, sur la base du poids de chitosane.

9. - Film selon la revendication 8, comprenant environ 10 à environ 100 pour cent en poids de lysozyme.

10. - Film selon l'une quelconque des revendications précédentes, comprenant en outre au moins un composant supplémentaire choisi parmi un plastifiant ou un agent réticulant.

11. - Film selon la revendication 10, comprenant en outre au moins un plastifiant et au moins un agent réticulant.

12. - Film selon la revendication 10 ou la revendication 11, dans lequel le plastifiant est présent dans une quantité d'environ 1 à environ 50 pour cent en poids, sur la base du poids du chitosane.

13. - Procédé de fabrication d'un film, comprenant :

- la dissolution ou la dispersion de chitosane et de lysozyme dans un milieu aqueux conduisant à une solution ou dispersion filmogène ;
- l'application de la solution ou dispersion filmogène sur une surface de substrat ; et
- la conversion de la solution ou dispersion filmogène en un film.

14. - Procédé selon la revendication 13, dans lequel le chitosane est dissous dans un acide organique aqueux.

15. - Procédé selon la revendication 14, dans lequel l'acide organique aqueux est choisi parmi l'acide acétique, l'acide sorbique, l'acide propionique, l'acide lactique, l'acide glutamique, l'acide benzoïque, l'acide citrique, l'acide maléique, l'acide glycolique, l'acide acrylique, l'acide succinique, l'acide oxalique, l'acide ascorbique, l'acide tartrique ou leurs mélanges.

16. - Procédé selon la revendication 14 ou la revendication 15, dans lequel le lysozyme est dissous dans de l'eau, conduisant à une solution de lysozyme, puis la solution de lysozyme est mélangée avec la solution de chitosane, ou dans lequel le lysozyme est dissous dans de l'eau, conduisant à une solution de lysozyme, puis la solution de lysozyme est mélangée avec la solution de chitosane, le mélange de la solution de lysozyme et de la solution de chitosane se produisant dans des conditions de température ambiante.

17. - Procédé selon la revendication 16, dans lequel la solution de lysozyme comprend environ 5 à environ 20 pour cent en poids de lysozyme.

18. - Procédé selon l'une quelconque des revendications 13 à 17, dans lequel la conversion de la solution ou dispersion filmogène en le film a lieu par séchage.

19. - Procédé selon l'une quelconque des revendications 13 à 18, dans lequel la surface de substrat comprend la surface d'un article alimentaire.

20. - Procédé selon la revendication 19, dans lequel le film comprend une quantité efficace antimicrobienne de lysozyme, et l'activité antimicrobienne du film dure pendant au moins trois semaines.

**21.** - Procédé selon l'une quelconque des revendications 13 à 20, comprenant en outre la dissolution ou la dispersion d'au moins un autre additif dans le milieu aqueux.

**22.** - Procédé selon l'une quelconque des revendications 13 à 21, comprenant en outre la disposition du film sur une surface d'article alimentaire.

**23.** - Procédé selon les revendications 19 ou 20, dans lequel la solution ou dispersion filmogène est appliquée sur la surface d'article alimentaire par pulvérisation, brossage, ruissellement ou immersion.

**24.** - Film obtenu par le procédé tel que défini à l'une des revendications 13 à 23.

**25.** - Film selon la revendication 24, dans lequel le lysozyme est présent dans le film dans une quantité efficace antimicrobienne.

**26.** - Article alimentaire qui comprend un film antimicrobien sur au moins une partie d'une surface de l'article alimentaire, le film antimicrobien comprenant du lysozyme incorporé dans une matrice polymère de chitosane.

**27.** - Article alimentaire selon la revendication 26, dans lequel le lysozyme est présent dans le film dans une quantité d'environ 10 à environ 200 pour cent en poids, sur la base du poids du chitosane.

**28.** - Article alimentaire selon la revendication 26, dans lequel le film a une perméabilité à la vapeur d'eau d'environ 1 à environ 300 g mm/m$^2$ d kPa.

**29.** - Article alimentaire selon l'une quelconque des revendications 26 à 28, dans lequel le film est obtenu par un procédé comprenant :

   - la dissolution ou la dispersion de chitosane et de lysozyme dans un milieu aqueux conduisant à une solution ou dispersion filmogène ;
   - l'application de la solution ou dispersion filmogène sur une surface de substrat ; et
   - la conversion de la solution ou dispersion filmogène en un film.

**FIG. 1**

**FIG. 2A**

**FIG. 2B**

**FIG. 3A**

**FIG. 3B**

**FIG. 3C**

**FIG. 3D**

**FIG. 4A**          **FIG. 4B**

**FIG. 4C**          **FIG. 4D**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6451365 B
- JP 08089224 B
- JP 11032742 B
- JP 10015042 B

### Non-patent literature cited in the description

- **Chen et al.** *Journal of Food Processing and Preservation,* 1996, vol. 20, 379-390
- **Park, S.-l. ; Zhao, Y.** Incorporation of High Concentration of Mineral or Vitamin into Chitosan-Based Films. *Journal of Agricultural and Food Chemistry,* 2004, vol. 52, 1933-1939